# EUROPEAN PATENT SPECIFICATION

(11) **EP 3 438 187 B1**
(45) Date of publication and mention of the grant of the patent: **14.12.2022**
(21) Application number: 17774578.3
(22) Date of filing: 22.03.2017
(51) Int. Cl.: C08K 5/00, C08K 5/12, C08L 27/06, C08L 83/04, C08J 5/00, B29C 41/20, B32B 5/18, B32B 5/20, B32B 7/12, B32B 27/18, B32B 27/20, B32B 27/22, B32B 27/06, B32B 27/30

(54) **VINYL CHLORIDE RESIN COMPOSITION, VINYL CHLORIDE RESIN MOLDED PRODUCT, AND LAMINATE**
VINYLCHLORIDHARZZUSAMMENSETZUNG, FORMPRODUKT AUS VINYLCHLORIDHARZ UND LAMINAT
COMPOSITION DE RÉSINE DE CHLORURE DE VINYLE, PRODUIT MOULÉ EN RÉSINE DE CHLORURE DE VINYLE ET STRATIFIÉ

(30) Priority: 29.03.2016 JP 2016066587
(43) Date of publication of application: 06.02.2019
(73) Proprietor: Zeon Corporation, Tokyo 100-8246 (JP)
(72) Inventor: FUJIWARA, Takanori, Tokyo 100-8246 (JP)
(74) Representative: Maiwald GmbH
(86) International application number: PCT/JP2017/011447
(87) International publication number: WO 2017/170037

(56) References cited:
- EP-A1- 2 933 292
- EP-A1- 3 121 229
- WO-A1-2014/091867
- WO-A1-2015/141182
- JP-A- H0 753 818
- JP-A- H06 279 642
- JP-A- H09 132 689
- JP-A- H11 140 263
- JP-A- 2016 134 268
- DATABASE CA [Online] CHEMICAL ABSTRACTS SERVICE, COLUMBUS, OHIO, US; 10 July 1997 (1997-07-10), TSUTAYA, HIDEYO ET AL: "Vinyl chloride polymer compositions for heat- and oil-resistant coating materials of electric cables", XP002794817, retrieved from STN Database accession no. 1997:428673 & JP H09 132689 A (MITSUI TOATSU CHEMICALS) 20 May 1997 (1997-05-20)
- DATABASE CA [Online] CHEMICAL ABSTRACTS SERVICE, COLUMBUS, OHIO, US; 31 May 1999 (1999-05-31), KANEKO, KAZUYOSHI ET AL: "Poly(vinyl chloride) based resin compositions and electric wires coated with the resin compositions", XP002794818, retrieved from STN Database accession no. 1999:332995 & JP H11 140263 A (MITSUI CHEMICALS INC) 25 May 1999 (1999-05-25)
- DATABASE CA [Online] CHEMICAL ABSTRACTS SERVICE, COLUMBUS, OHIO, US; 14 January 1995 (1995-01-14), SUZUKI, MAKOTO ET AL: "Vinyl chloride-based resin compositions for powder slush molding", XP002794819, retrieved from STN Database accession no. 1995:294762 & JP H06 279642 A (SHINETSU CHEMICAL CO; NIPPON PIGMENT) 4 October 1994 (1994-10-04)
- DATABASE CA [Online] CHEMICAL ABSTRACTS SERVICE, COLUMBUS, OHIO, US; 25 May 1995 (1995-05-25), SAKAMAKI, YOSHUKI ET AL: "Vinyl chloride polymer compositions", XP002794820, retrieved from STN Database accession no. 1995:571356 & JP H07 53818 A (ASAHI DENKA KOGYO KK) 28 February 1995 (1995-02-28)
- DATABASE CA [Online] CHEMICAL ABSTRACTS SERVICE, COLUMBUS, OHIO, US; 12 January 2012 (2012-01-12), KOBAYASHI, TOSHIYA ET AL: "Vinyl chloride polymer compositions for powder molding, their moldings, and laminates", XP002794823, retrieved from STN Database accession no. 2012:53030 -& JP 2012 007026 A (NIPPON ZEON CO) 12 January 2012 (2012-01-12)

## Description

### TECHNICAL FIELD

The present disclosure relates to a vinyl chloride resin composition, a vinyl chloride resin molded product, and a laminate.

### BACKGROUND

Vinyl chloride resins typically have excellent characteristics such as cold resistance, heat resistance, and oil resistance, and therefore are used for various applications.

Specifically, vinyl chloride resins are used, for example, in the formation of surface skins of automobile interior parts such as automobile instrument panels and door trims. An automobile interior part such as an automobile instrument panel typically has a layered structure in which a foamed polyurethane layer is disposed between a substrate and a surface skin formed from a molded product of a vinyl chloride resin. The vinyl chloride resin molded product forming the surface skin of the automobile instrument panel is required to have performance of breaking as designed without fragments being scattered upon inflation and expansion of an air bag.

In recent years, for example, there have been attempts to improve vinyl chloride resin molded products and vinyl chloride resin compositions suitable for use in the production of automobile instrument panels. Proposed techniques involve improving the tensile elongation of a vinyl chloride resin molded product at low temperature to provide such a vinyl chloride resin molded product that, when used as a surface skin of an automobile instrument panel, exhibits excellent ductility even at low temperature and breaks as designed without fragments being scattered upon inflation and expansion of an air bag.

Specifically, for example, WO 2015/141182 A1 (PTL 1) and WO 2014/091867 A1 (PTL 2) each disclose a vinyl chloride resin composition containing a vinyl chloride resin and plasticizers using both of a trimellitate and a pyromellitate whose ester-forming alkyl groups are branched alkyl groups. According to PTL 1 and PTL 2, the use of such a composition enables the formation of a vinyl chloride resin molded product having excellent tensile elongation at low temperature.

### CITATION LIST

### Patent Literatures

PTL 1: WO 2015/141182 A1
PTL 2: WO 2014/091867 A1

### SUMMARY

### (Technical Problem)

Surface skins of automobile instrument panels that break as designed upon inflation and expansion of an air bag even in harsher conditions have been demanded in recent years. The vinyl chloride resin molded product described in PTL 1 or PTL 2, however, when used as a surface skin of an automobile instrument panel, may develop damage such as cracking at an unexpected position of the surface skin portion different from a designed position upon inflation and expansion of an air bag, causing scattering of fragments of the surface skin portion.

In view of such a problem, the inventor focused on the fact that cracking at an unexpected position and scattering of fragments upon inflation and expansion of an air bag can be suppressed by using, as a surface skin of an automobile instrument panel, a vinyl chloride resin molded product that not only has excellent tensile elongation at low temperature but also has a low peak top temperature of loss modulus E" (i.e. having a high content of viscous component and excellent in energy absorbing performance) in an initial stage and after a heat aging test.

It could therefore be helpful to provide a vinyl chloride resin molded product that has a low peak top temperature of loss modulus E" in an initial stage and after a heat aging test while ensuring tensile elongation at low temperature. It could also be helpful to provide a vinyl chloride resin composition capable of forming the vinyl chloride resin molded product, and a laminate including the vinyl chloride resin molded product.

### (Solution to Problem)

Through extensive studies to solve the problems stated above, the inventor discovered that, by forming a vinyl chloride resin molded product using a vinyl chloride resin composition containing a vinyl chloride resin, a trimellitate, and a pyromellitate having a predetermined structure so that the percentage content of the pyromellitate is a predetermined proportion, the peak top temperature of loss modulus E" in an initial stage and after a heat aging test of the vinyl chloride resin molded product can be lowered while ensuring tensile elongation at low temperature.

To advantageously solve the problems stated above, a presently disclosed vinyl chloride resin composition comprises: (a) a vinyl chloride resin; (b) a trimellitate; (c) a pyromellitate formed from a compound represented by the following formula (1) 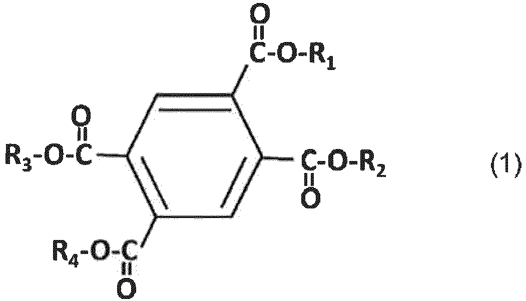 where R₁, R₂, R₃, and R₄ are alkyl groups that may be the same or different, and a total straight chain ratio of R₁, R₂, R₃, and R₄ is 90 mol% or more, and (d) a silicone oil, wherein a percentage content of (c) the pyromellitate relative to a total content of (b) the trimellitate and (c) the pyromellitate is 15 mass% or more. By forming a vinyl chloride resin molded product using the vinyl chloride resin composition produced using (c) the pyromellitate having alkyl groups with a predetermined straight chain ratio in a predetermined proportion together with (a) the vinyl chloride resin and (b) the trimellitate, the peak top temperature of loss modulus E" in an initial stage and after a heat aging test of the vinyl chloride resin molded product can be lowered while ensuring tensile elongation at low temperature. A surface skin of an automobile instrument panel produced using the vinyl chloride resin molded product formed using the vinyl chloride resin composition breaks as designed upon inflation and expansion of an air bag, without cracking at an unexpected position and scattering of fragments.

Herein, the "total straight chain ratio of R_{1,} R₂, R₃, and R₄" in formula (1) denotes the proportion (mol%) of straight chain alkyl groups in all of R₁ to R4 of an extracted pyromellitate obtained when extracting a portion or all of the pyromellitate contained in the vinyl chloride resin composition using tetrahydrofuran and measuring the extract using liquid chromatography.

Herein, a pyromellitate having the above-mentioned straight chain ratio of 90 mol% or more is also referred to as a straight chain (i.e. linear) pyromellitate, and a pyromellitate having the above-mentioned straight chain ratio of less than 90 mol% is also referred to as a branched pyromellitate.

Preferably, in the presently disclosed vinyl chloride resin composition, the percentage content of (c) the pyromellitate relative to the total content of (b) the trimellitate and (c) the pyromellitate is 40 mass% or less. While a straight chain pyromellitate particularly facilitates blocking of a vinyl chloride resin (a phenomenon that components or molded products stick to one another and cannot separate or peel away easily), as a result of the percentage content of (c) the pyromellitate in the vinyl chloride resin composition being not more than the above-mentioned upper limit, blocking of the vinyl chloride resin composition can be suppressed.

Preferably, in the presently disclosed vinyl chloride resin composition, the total content of (b) the trimellitate and (c) the pyromellitate relative to 100 parts by mass of (a) the vinyl chloride resin is 5 parts by mass or more and 200 parts by mass or less. As a result of the total content of (b) the trimellitate and (c) the pyromellitate in the vinyl chloride resin composition being in the above-mentioned range, tensile elongation at low temperature can be improved while suppressing the surface stickiness of a vinyl chloride resin molded product formed using the vinyl chloride resin composition.

The presently disclosed vinyl chloride resin composition further comprises (d) a silicone oil. As a result of the vinyl chloride resin composition containing (d) the silicone oil in addition to the components described above, blocking caused by a straight chain pyromellitate can be further reduced while further suppressing the surface stickiness of a vinyl chloride resin molded product formed using the vinyl chloride resin composition.

Preferably, in the presently disclosed vinyl chloride resin composition, a content of (d) the silicone oil relative to 100 parts by mass of (c) the pyromellitate is 0.7 parts by mass or more. While a straight chain pyromellitate particularly facilitates blocking of a vinyl chloride resin, as a result of the content of (d) the silicone oil being not less than the above-mentioned lower limit, blocking of the vinyl chloride resin composition can be further reduced.

The invention is directed to a use of the presently disclosed vinyl chloride resin composition in powder molding. The use of the vinyl chloride resin composition for powder molding enables, for example, the vinyl chloride resin composition to be more suited to the formation of a vinyl chloride resin molded product used in an automobile interior part such as an automobile instrument panel.

Preferably, the present invention is directed to the use of the presently disclosed vinyl chloride resin composition in powder slush molding. The use of the vinyl chloride resin composition for powder slush molding enables, for example, the vinyl chloride resin composition to be further suited to the formation of a vinyl chloride resin molded product used in an automobile interior part such as an automobile instrument panel.

To advantageously solve the problems stated above, a presently disclosed vinyl chloride resin molded product is obtainable through molding of the vinyl chloride resin composition described above. By forming a vinyl chloride resin molded product using the vinyl chloride resin composition containing (a) the vinyl chloride resin, (b) the trimellitate, (c) the predetermined pyromellitate in a predetermined percentage content, and (d) silicone oil, the peak top temperature of loss modulus E" in an initial stage and after a heat aging test of the vinyl chloride resin molded product can be lowered while ensuring tensile elongation at low temperature.

The present invention is directed to a use of the presently disclosed vinyl chloride resin molded product as a surface skin of an automobile instrument panel. The surface skin of the automobile instrument panel formed using the presently disclosed vinyl chloride resin molded product breaks as designed without fragments being scattered upon expansion of an air bag, and resists damage at an unexpected position.

To advantageously solve the problems stated above, a presently disclosed laminate comprises: a foamed polyurethane molded product; and the vinyl chloride resin molded product described above. The laminate formed using the foamed polyurethane molded product and the vinyl chloride resin molded product has such a vinyl chloride resin molded product portion whose peak top temperature of loss modulus E" in an initial stage and after a heat aging test has been lowered while ensuring tensile elongation at low temperature.

### (Advantageous Effect)

It is therefore possible to provide a vinyl chloride resin molded product that has a low peak top temperature of loss modulus E" in an initial stage and after a heat aging test while ensuring tensile elongation at low temperature. It is also possible to provide a vinyl chloride resin composition capable of forming the vinyl chloride resin molded product, and a laminate including the vinyl chloride resin molded product.

### DETAILED DESCRIPTION

One of the disclosed embodiments is described in detail below.

A presently disclosed vinyl chloride resin composition can be used, for example, in the formation of a presently disclosed vinyl chloride resin molded product. The vinyl chloride resin molded product formed using the presently disclosed vinyl chloride resin composition can be used, for example, in the production of a presently disclosed laminate including the vinyl chloride resin molded product. The presently disclosed vinyl chloride resin molded product is suitable for use as an automobile interior material, e.g. a surface skin of an automobile interior part such as an automobile instrument panel.

### (Vinyl chloride resin composition)

The presently disclosed vinyl chloride resin composition comprises: (a) a vinyl chloride resin, (b) a trimellitate, (c) a pyromellitate having alkyl groups with a predetermined straight chain ratio, wherein a percentage content of (c) the pyromellitate is a predetermined proportion or more. The presently disclosed vinyl chloride resin composition further contains (d) a silicone oilin addition to these components. Since the presently disclosed vinyl chloride resin composition contains the above-mentioned predetermined component in a predetermined proportion, the peak top temperature of loss modulus E" in an initial stage and after a heat aging test of a vinyl chloride resin molded product or the like formed using the composition can be lowered while ensuring tensile elongation at low temperature. Consequently, for example, a surface skin of an automobile instrument panel using the vinyl chloride resin molded product can break favorably as designed upon inflation and expansion of an air bag, without cracking at an unexpected position.

### <(a) Vinyl chloride resin>

(a) The vinyl chloride resin used in the vinyl chloride resin composition may, for example, contain one or more types of vinyl chloride resin particles, and optionally further contain one or more types of vinyl chloride resin fine particles. In particular, (a) the vinyl chloride resin preferably contains at least vinyl chloride resin particles, more preferably contains vinyl chloride resin particles and vinyl chloride resin fine particles, and further preferably contains one type of vinyl chloride resin particles and two types of vinyl chloride resin fine particles together.

Herein, the term "resin particles" is used to refer to particles having a particle diameter of at least 30 µm and the term "resin fine particles" is used to refer to particles having a particle diameter of less than 30 µm.

Conventionally known production methods such as suspension polymerization, emulsion polymerization, solution polymerization, and bulk polymerization can be used to produce (a) the vinyl chloride resin.

### «Composition»

Examples of (a) the vinyl chloride resin include homopolymers composed of vinyl chloride monomer units, and vinyl chloride-based copolymers preferably containing 50 mass% or more of vinyl chloride monomer units and more preferably 70 mass% or more of vinyl chloride monomer units. Specific examples of monomers (comonomers) copolymerizable with vinyl chloride monomers that can form vinyl chloride copolymers include: olefins such as ethylene and propylene; halogenated olefins such as allyl chloride, vinylidene chloride, vinyl fluoride, and trifluorochloroethylene; carboxylic acid vinyl esters such as vinyl acetate and vinyl propionate; vinyl ethers such as isobutyl vinyl ether and cetyl vinyl ether; allyl ethers such as allyl-3-chloro-2-oxy propyl ether and allyl glycidyl ether; unsaturated carboxylic acids, esters of unsaturated carboxylic acids, and acid anhydrides of unsaturated carboxylic acids such as acrylic acid, maleic acid, itaconic acid, acrylic acid-2-hydroxyethyl, methyl methacrylate, monomethyl maleate, diethyl maleate, and maleic anhydride; unsaturated nitriles such as acrylonitrile and methacrylonitrile; acrylamides such as acrylamide, N-methylolacrylamide, acrylamido-2-methylpropane sulfonic acid, and (meth)acrylamidopropyltrimethylammonium chloride; and allyl amines and derivatives thereof such as allylamine benzoate and diallyldimethylammonium chloride. The above examples of monomers are merely some of comonomers. Further examples of various types of monomers that can be used as comonomers are provided in pages 75-104 of "Polyvinyl chloride" edited by the Vinyl Section of the Kinki Chemical Society Japan and published by Nikkan Kogyo Shimbun, Ltd. (1988). Any one of these comonomers or any two or more of these comonomers may be used. Moreover, (a) the vinyl chloride resin may include a resin formed by graft polymerization of (1) vinyl chloride or (2) vinyl chloride and a comonomer such as described above, with a resin such as an ethylene-vinyl acetate copolymer, an ethylene-methyl methacrylate copolymer, an ethylene-ethyl acrylate copolymer, or a chlorinated polyethylene.

The present description uses the term "(meth)acryl" to refer to either or both of acryl and methacryl.

### «Vinyl chloride resin particles»

In the vinyl chloride resin composition, the vinyl chloride resin particles typically function as a matrix resin (substrate). The vinyl chloride resin particles are preferably produced by suspension polymerization.

### [Average degree of polymerization]

The average degree of polymerization of the vinyl chloride resin particles is preferably 800 or more, more preferably 1000 or more, further preferably 1800 or more, and still more preferably 2300 or more, and preferably 5000 or less, and more preferably 3000 or less. As a result of the average degree of polymerization of the vinyl chloride resin particles being not less than the above-mentioned lower limit, more favorable tensile elongation at low temperature can be achieved while sufficiently ensuring the physical strength of a vinyl chloride resin molded product formed using the vinyl chloride resin composition. As a result of the average degree of polymerization of the vinyl chloride resin particles being not more than the above-mentioned upper limit, the meltability of the vinyl chloride resin molded product can be improved to improve surface smoothness.

Herein, the "average degree of polymerization" can be measured in accordance with JIS K6720-2.

### [Average particle diameter]

The average particle diameter of the vinyl chloride resin particles is typically 30 µm or more, preferably 50 µm or more, and more preferably 100 µm or more, and preferably 500 µm or less, more preferably 250 µm or less, and further preferably 200 µm or less. As a result of the average particle diameter of the vinyl chloride resin particles being not less than the above-mentioned lower limit, the powder fluidity of the vinyl chloride resin composition can be further improved. As a result of the average particle diameter of the vinyl chloride resin particles being not more than the above-mentioned upper limit, the meltability of the vinyl chloride resin composition can be further improved, and the smoothness of the vinyl chloride resin molded product formed using the composition can be further improved.

Herein, the "average particle diameter" can be measured as a volume-average particle diameter in accordance with JIS Z8825 by a laser diffraction method.

### [Percentage content]

The percentage content of the vinyl chloride resin particles in (a) the vinyl chloride resin relative to 100 mass% of (a) the vinyl chloride resin is preferably 70 mass% or more and more preferably 75 mass% or more, may be 100 mass%, and is preferably 95 mass% or less and more preferably 90 mass% or less. As a result of the percentage content of the vinyl chloride resin particles in (a) the vinyl chloride resin being not less than the above-mentioned lower limit, more favorable tensile elongation at low temperature can be achieved while sufficiently ensuring the physical strength of a vinyl chloride resin molded product formed using the vinyl chloride resin composition. As a result of the percentage content of the vinyl chloride resin particles in (a) the vinyl chloride resin being not more than the above-mentioned upper limit, the powder fluidity of the vinyl chloride resin composition can be further improved.

### «Vinyl chloride resin fine particles»

In the vinyl chloride resin composition, the vinyl chloride resin fine particles typically function as a dusting agent (powder fluidity modifier). The vinyl chloride resin fine particles are preferably produced by emulsion polymerization.

### [Average degree of polymerization]

The average degree of polymerization of the vinyl chloride resin fine particles is preferably 600 or more and more preferably 900 or more, and preferably 2000 or less and more preferably 1700 or less, as the whole vinyl chloride resin fine particles (arithmetic mean) contained in (a) the vinyl chloride resin. For example, in the case of using two types of vinyl chloride resin fine particles having different average degrees of polymerization as dusting agents, appropriate selection may be made, e.g. the average degree of polymerization of one type of vinyl chloride resin fine particles being 500 or more and 1500 or less and the average degree of polymerization of the other type of vinyl chloride resin fine particles being 1600 or more and 2200 or less. As a result of the average degree of polymerization of the vinyl chloride resin fine particles as a dusting agent being not less than the above-mentioned lower limit, the vinyl chloride resin composition has more favorable powder fluidity, and a vinyl chloride resin molded product formed using the composition has improved tensile elongation at low temperature. As a result of the average degree of polymerization of the vinyl chloride resin fine particles being not more than the above-mentioned upper limit, the meltability of the vinyl chloride resin composition can be further improved, and the surface smoothness of a vinyl chloride resin molded product formed using the composition can be further improved.

In terms of further improving the meltability of the vinyl chloride resin composition, the average degree of polymerization of the vinyl chloride resin fine particles as a dusting agent is preferably lower than the average degree of polymerization of the vinyl chloride resin particles as a substrate.

### [Average particle diameter]

The average particle diameter of the vinyl chloride resin fine particles is typically less than 30 µm, preferably 10 µm or less, and preferably 0.1 µm or more. As a result of the average particle diameter of the vinyl chloride resin fine particles being not less than the above-mentioned lower limit, more favorable powder fluidity of the vinyl chloride resin composition can be achieved, for example, without excessively reducing the size as a dusting agent. As a result of the average particle diameter of the vinyl chloride resin fine particles being not more than the above-mentioned upper limit, the meltability of the vinyl chloride resin composition can be further enhanced, and the smoothness of the formed vinyl chloride resin molded product can be further improved.

### [Percentage content]

The percentage content of the vinyl chloride resin fine particles in (a) the vinyl chloride resin relative to 100 mass% of (a) the vinyl chloride resin is preferably 5 mass% or more and more preferably 10 mass% or more, and preferably 30 mass% or less and more preferably 25 mass% or less, and may be 0 mass%. As a result of the percentage content of the vinyl chloride resin fine particles in (a) the vinyl chloride resin being not less than the above-mentioned lower limit, the powder fluidity of the vinyl chloride resin composition can be further improved. As a result of the percentage content of the vinyl chloride resin fine particles in (a) the vinyl chloride resin being not more than the above-mentioned upper limit, the tensile elongation at low temperature of a vinyl chloride resin molded product formed using the vinyl chloride resin composition can be further enhanced.

### <(b) Trimellitate>

The presently disclosed vinyl chloride resin composition needs to further contain (b) the trimellitate. If the vinyl chloride resin composition does not contain (b) the trimellitate, a vinyl chloride molded product obtained using the composition cannot exhibit favorable tensile elongation at low temperature. (b) The trimellitate typically functions as a plasticizer in the vinyl chloride resin composition.

(b) The trimellitate is typically an ester compound of trimellitic acid and a monohydric alcohol, and can be expressed by a compound represented by the following formula (2):

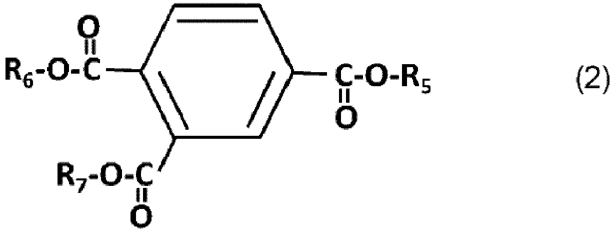

In formula (2), R₅, R₆, and R₇ are preferably any alkyl groups that may be the same or different.

### «Type of alkyl group»

Examples of preferable alkyl groups included in (b) the trimellitate as R₅, R₆, and R₇ in formula (2) include:
straight chain alkyl groups such as a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, and an n-stearyl group; and
branched alkyl groups such as an i-propyl group, an i-butyl group, an i-pentyl group, an i-hexyl group, an i-heptyl group, an i-octyl group, a 2-ethylhexyl group, an i-nonyl group, an i-decyl group, an i-undecyl group, an i-dodecyl group, an i-tridecyl group, an i-tetradecyl group, an i-pentadecyl group, an i-hexadecyl group, an i-heptadecyl group, an i-octadecyl group, a t-butyl group, a t-pentyl group, a t-hexyl group, a t-heptyl group, a t-octyl group, a t-nonyl group, a t-decyl group, a t-undecyl group, a t-dodecyl group, a t-tridecyl group, a t-tetradecyl group, a t-pentadecyl group, a t-hexadecyl group, a t-heptadecyl group, a t-octadecyl group.
(b) The trimellitate may be a single compound or may be a mixture.

### <<Straight chain ratio of R₅ to R₇>>

The straight chain ratio of each of R₅, R₆, and R₇ in formula (2) is preferably 90 mol% or more, more preferably 99 mol% or more, and further preferably 100 mol%, without being limited thereto As a result of each of R₅, R₆, and R₇ of (b) the trimellitate being an alkyl group with a straight chain ratio of 90 mol% or more, the tensile elongation at low temperature of a vinyl chloride resin molded product formed using the vinyl chloride resin composition can be further enhanced.

Herein, the "straight chain ratio of R₅" in formula (2) denotes the proportion (mol%) of straight chain alkyl groups in all of R₅ of an extracted trimellitate obtained when extracting a portion or all of the trimellitate contained in the vinyl chloride resin composition using tetrahydrofuran and measuring the extract using liquid chromatography. The same applies to the "straight chain ratio of R₆" and "straight chain ratio of R₇".

### <<Carbon number of R₅ to R₇>>

In (b) the trimellitate, preferably R₅, R₆, and R₇ in formula (2) are each an alkyl group having a carbon number of 8 or more and having a carbon number of 10 or less, more preferably all of R₅, R₆, and R₇ are alkyl groups having a carbon number of 8 or 9, and further preferably all of R₅, R₆, and R₇ are an n-octyl group or an n-nonyl group. As a result of (b) the trimellitate having alkyl groups with a carbon number of not less than the above-mentioned lower limit, the tensile elongation at low temperature of a vinyl chloride resin molded product formed using the vinyl chloride resin composition can be further enhanced. As a result of (b) the trimellitate having alkyl groups with a carbon number of not more than the above-mentioned upper limit, the physical strength of a vinyl chloride resin molded product formed using the vinyl chloride resin composition can be maintained.

Herein, the "carbon number" can be measured, for example, using liquid chromatography, without being limited thereto.

### <<Percentage contents of alkyl groups having respective carbon numbers>>

In (b) the trimellitate, the total percentage content of alkyl groups having a carbon number of 7 or less and a carbon number of 11 or more is preferably 0 mol% or more and 10 mol% or less, relative to all of R₅ to R₇ of (b) the trimellitate contained in the vinyl chloride resin composition.

In (b) the trimellitate, the total percentage content of alkyl groups having a carbon number of 8 and a carbon number of 9 is preferably 5 mol% or more and 100 mol% or less, relative to all of R₅ to R₇ in formula (2).

In (b) the trimellitate, the percentage content of an alkyl group having a carbon number of 10 is preferably 0 mol% or more and 95 mol% or less, relative to all of R₅ to R₇ in formula (2).

Herein, the "percentage content of an alkyl group" having each carbon number in the trimellitate can be calculated as the proportion (mol%) of the alkyl group of the carbon number in all of R₅ to R₇ of the trimellitate when hydrolyzing the trimellitate used in the vinyl chloride resin composition by alkaline and then separating hydrolyzed alcohol to obtain a sample and measure it using gas chromatography, without being limited thereto.

### «Content»

The content of (b) the trimellitate relative to 100 parts by mass of (a) the vinyl chloride resin is typically more than 0 parts by mass, preferably 1 parts by mass or more, more preferably 60 parts by mass or more, and further preferably 65 parts by mass or more, and preferably 180 parts by mass or less, more preferably 150 parts by mass or less, and further preferably 125 parts by mass or less. As a result of the content of (b) the trimellitate being not less than the above-mentioned lower limit, the tensile elongation at low temperature of a vinyl chloride resin molded product formed using the vinyl chloride resin composition can be maintained more favorably. As a result of the content of (b) the trimellitate being not more than the above-mentioned upper limit, the stickiness of the vinyl chloride resin composition and the vinyl chloride resin molded product caused by plasticizers can be further suppressed.

### <(c) Pyromellitate>

The presently disclosed vinyl chloride resin composition needs to further contain (c) the pyromellitate having a predetermined structure in a predetermined proportion or more. Thus, the presently disclosed vinyl chloride resin composition needs to use both of (b) the trimellitate and (c) the pyromellitate. (c) The pyromellitate typically functions as a plasticizer in the vinyl chloride resin composition, as with (b) the trimellitate.

(c) The pyromellitate is an ester compound of pyromellitic acid and a monohydric alcohol, and can be expressed by a compound represented by the following formula (1):

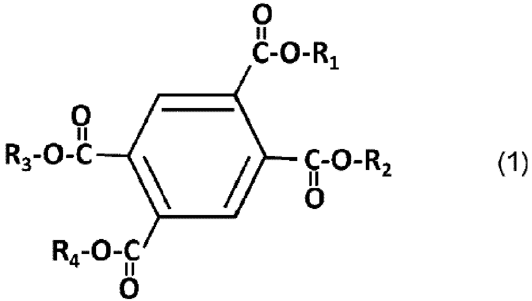

In formula (1), R₁, R₂, R₃, and R₄ are alkyl groups that may be the same or different. The total straight chain ratio of R₁, R₂, R₃, and R₄ in formula (1) needs to be a predetermined proportion or more.

### <<Total straight chain ratio of R₁ to R₄>>

The total straight chain ratio of R₁, R₂, R₃, and R₄ in formula (1) needs to be 90 mol% or more. In other words, (c) the pyromellitate needs to be a straight chain pyromellitate. The total straight chain ratio of R₁, R₂, R₃, and R₄ in formula (1) is preferably 99 mol% or more, and more preferably 100 mol%. Thus, it is preferable that R₁ to R₄ of (c) the pyromellitate contained in the vinyl chloride resin composition are all straight chain alkyl groups. If the total straight chain ratio of the alkyl groups R₁ to R₄ of (c) the pyromellitate is less than 90 mol%, the peak top temperature of loss modulus E" in an initial stage and after a heat aging test of a vinyl chloride resin molded product formed using the vinyl chloride resin composition cannot be lowered favorably.

### «Type of alkyl group»

Examples of alkyl groups included in (c) the pyromellitate as R₁, R₂, R₃, and R₄ in formula (1) include:
straight chain alkyl groups such as a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, and an n-stearyl group; and
branched alkyl groups such as an i-propyl group, an i-butyl group, an i-pentyl group, an i-hexyl group, an i-heptyl group, an i-octyl group, a 2-ethylhexyl group, an i-nonyl group, an i-decyl group, an i-undecyl group, an i-dodecyl group, an i-tridecyl group, an i-tetradecyl group, an i-pentadecyl group, an i-hexadecyl group, an i-heptadecyl group, an i-octadecyl group, a t-butyl group, a t-pentyl group, a t-hexyl group, a t-heptyl group, a t-octyl group, a t-nonyl group, a t-decyl group, a t-undecyl group, a t-dodecyl group, a t-tridecyl group, a t-tetradecyl group, a t-pentadecyl group, a t-hexadecyl group, a t-heptadecyl group, a t-octadecyl group.
(c) The pyromellitate may be a single compound or may be a mixture.

### <<Carbon number of R₁ to R₄>>

In (c) the pyromellitate, R₁, R₂, R₃ and R₄ in formula (1) are each preferably an alkyl group having a carbon number of 4 or more, more preferably an alkyl group having a carbon number of 6 or more, preferably an alkyl group having a carbon number of 12 or less, more preferably an alkyl group having a carbon number of 10 or less, and further preferably an n-hexyl group, an n-octyl group, or an n-decyl group. As a result of (c) the pyromellitate having alkyl groups with a carbon number of not less than the above-mentioned lower limit, the peak top temperature of loss modulus E" in an initial stage and after a heat aging test of a vinyl chloride resin molded product formed using the vinyl chloride resin composition can be lowered while favorably ensuring tensile elongation at low temperature. As a result of (c) the pyromellitate having alkyl groups with a carbon number of not more than the above-mentioned upper limit, the physical strength of a vinyl chloride resin molded product formed using the vinyl chloride resin composition can be further enhanced.

### <<Percentage contents of alkyl groups having respective carbon numbers>>

In (c) the pyromellitate, the alkyl groups of R₁ to R₄ of (c) the pyromellitate contained in the vinyl chloride resin composition preferably have two or more different carbon numbers in one molecule, more preferably have three or more different carbon numbers in one molecule, and further preferably have three different carbon numbers in one molecule. In (c) the pyromellitate, the total percentage content of an alkyl group having a carbon number of 6 is preferably more than 0 mol% and 30 mol% or less, the total percentage content of an alkyl group having a carbon number of 8 is preferably 10 mol% or more and 70 mol% or less, and the total percentage content of an alkyl group having a carbon number of 10 is preferably 20 mol% or more and 80 mol% or less, relative to all of R₁ to R₄ of (c) the pyromellitate contained in the vinyl chloride resin composition. As a result of alkyl groups having carbon numbers of 6, 8, and 10 coexisting in these percentage contents in (c) the pyromellitate, the peak top temperature of loss modulus E" in an initial stage and after a heat aging test of a vinyl chloride resin molded product formed using the vinyl chloride resin composition can be lowered more favorably.

Herein, the "percentage content of an alkyl group" having each carbon number in the pyromellitate can be calculated by the same method as the above-mentioned trimellitate.

### «Percentage content»

The percentage content of (c) the pyromellitate relative to the total content (100 mass%) of (b) the trimellitate and (c) the pyromellitate needs to be 15 mass% or more. The percentage content of (c) the pyromellitate is preferably 20 mass% or more, typically less than 100 mass%, preferably 40 mass% or less, and more preferably 30 mass% or less. If the percentage content of (c) the pyromellitate is less than the above-mentioned lower limit, the peak top temperature of loss modulus E" in an initial stage and after a heat aging test of a vinyl chloride resin molded product formed using the vinyl chloride resin composition cannot be lowered favorably. If the percentage content of (c) the pyromellitate is not more than the above-mentioned upper limit, the blocking resistance of the vinyl chloride resin composition and the vinyl chloride resin molded product can be improved, thus easing the production of vinyl chloride resin molded products

The percentage content of (c) the pyromellitate relative to the total content (100 mass%) of the plasticizers (including (b) the trimellitate, (c) the pyromellitate, and other plasticizers described below) is preferably 15 mass% or more, more preferably 20 mass% or more, typically less than 100 mass%, preferably 40 mass% or less, and more preferably 30 mass% or less. As a result of the percentage content of (c) the pyromellitate being not less than the above-mentioned lower limit, the peak top temperature of loss modulus E" in an initial stage and after a heat aging test of a vinyl chloride resin molded product formed using the vinyl chloride resin composition can be lowered more favorably. As a result of the percentage content of (c) the pyromellitate being not more than the above-mentioned upper limit, the blocking resistance of the vinyl chloride resin composition and the vinyl chloride resin molded product can be further improved.

The content of (c) the pyromellitate relative to 100 parts by mass of (a) the vinyl chloride resin is preferably 1 parts by mass or more, more preferably 10 parts by mass or more, and more preferably 30 parts by mass or more, and preferably 180 parts by mass or less, more preferably 100 parts by mass or less, and further preferably 50 parts by mass or less. As a result of the content of (c) the pyromellitate being not less than the above-mentioned lower limit, the peak top temperature of loss modulus E" in an initial stage and after a heat aging test of a vinyl chloride resin molded product formed using the vinyl chloride resin composition can be lowered more favorably. As a result of the content of (c) the pyromellitate being not more than the above-mentioned upper limit, the blocking resistance of the vinyl chloride resin composition and the vinyl chloride resin molded product can be further enhanced.

The total content of (b) the trimellitate and (c) the pyromellitate relative to 100 parts by mass of (a) the vinyl chloride resin is preferably 5 parts by mass or more, more preferably 70 parts by mass or more, and further preferably 110 parts by mass or more, and preferably 200 parts by mass or less, and more preferably 170 parts by mass or less. As a result of the content of (b) the trimellitate and (c) the pyromellitate being not less than the above-mentioned lower limit, for example, their effects as plasticizers are sufficient, and the tensile elongation at low temperature of a vinyl chloride resin molded product formed using the vinyl chloride resin composition can be further improved. As a result of the content of (b) the trimellitate and (c) the pyromellitate being not more than the above-mentioned upper limit, the surface stickiness of the obtained vinyl chloride resin molded product can be suppressed more favorably.

Although the form of (b) the trimellitate and (c) the pyromellitate is not limited, they are preferably liquid at normal temperature and normal pressure, in terms of easiness of mixture with (a) the vinyl chloride resin and also in terms of suppressing blooming on the surface of the formed vinyl chloride resin molded product (a phenomenon that ingredients precipitate on the molded product surface and turn the surface white).

Herein, the "normal temperature" refers to 23 °C, and the "normal pressure" refers to 1 atm (absolute pressure).

### <(d) Silicone oil >

The presently disclosed vinyl chloride resin composition contains (d) the silicone oil, in addition to (a) the vinyl chloride resin, (b) the trimellitate, and (c) the pyromellitate described above. (d) The silicone oil typically serves as a moldability modifier, and a surface modifier in a vinyl chloride resin molded product molded using the vinyl chloride resin composition.

### «Content»

The content of (d) the silicone oil relative to 100 parts by mass of (c) the pyromellitate is preferably 0.7 parts by mass or more, more preferably 1 parts by mass or more, and further preferably 1.2 parts by mass or more, and preferably 2 parts by mass or less, and more preferably 1.5 parts by mass or less. As a result of the content of (d) the silicone oil being not less than the above-mentioned lower limit, the blocking of the vinyl chloride resin molded product caused by a straight chain pyromellitate can be further reduced. As a result of the content of (d) the silicone oil being not more than the above-mentioned upper limit, the vinyl chloride resin molded product can be produced more easily using the vinyl chloride resin composition.

The content of (d) the silicone oil relative to 100 parts by mass of the plasticizers (including (b) the trimellitate, (c) the pyromellitate, and other plasticizers described below) is preferably 0.1 parts by mass or more, and preferably 1 parts by mass or less, more preferably 0.5 parts by mass or less, and further preferably 0.4 parts by mass or less. As a result of the content of (d) the silicone oil being not less than the above-mentioned lower limit, the surface stickiness of the vinyl chloride resin molded product caused by plasticizers can be sufficiently suppressed, and the blocking by a straight chain pyromellitate can be further reduced. As a result of the content of (d) the silicone oil being not more than the above-mentioned upper limit, the vinyl chloride resin molded product can be produced more easily using the vinyl chloride resin composition.

The content of (d) the silicone oil relative to 100 parts by mass of (a) the vinyl chloride resin is preferably 0.1 parts by mass or more and more preferably 0.3 parts by mass or more, and preferably 1 parts by mass or less and more preferably 0.6 parts by mass or less. As a result of the content of (d) the silicone oil being not less than the above-mentioned lower limit, a vinyl chloride resin composition and a vinyl chloride resin molded product with lower surface stickiness and higher blocking resistance can be obtained. As a result of the content of (d) the silicone oil being not more than the above-mentioned upper limit, the vinyl chloride resin molded product can be produced more easily using the vinyl chloride resin composition.

### «Type»

(c) The silicone oil may be unmodified silicone oil, modified silicone oil, or a mixture thereof. Examples of the unmodified silicone oil include polymers having a polysiloxane structure such as polydimethylsiloxane, polydiethylsiloxane, and poly(methyl ethyl) siloxane, and mixtures thereof, without being limited thereto.

Examples of the modified silicone oil include: polar group-modified silicone oils in which a polar group, such as a carboxyl group, a hydroxyl group (silanol-modified), a mercapto group, an amino group, an epoxy group, or a (meth)acryloyloxy group has been introduced into a polymer having a polysiloxane structure; and nonpolar group-modified silicone oils in which a nonpolar group has been introduced into a polymer having a polysiloxane structure. Of these, polar group-modified silicone oil is preferable, and silanol-modified silicone oil is more preferable.

The moiety at which the polar group or nonpolar group is introduced may be an end (one end or both ends) and/or side chain of the polymer having a polysiloxane structure.

The present description uses the term "(meth)acryloyloxy" to refer to either or both of acryloyloxy and methacryloyloxy.

### <Additives>

The presently disclosed vinyl chloride resin composition may further contain various additives, besides the components described above. Although no specific limitations are placed on these additives, examples of additives that may be used include: other plasticizers besides (b) the trimellitate and (c) the pyromellitate; stabilizers such as perchloric acid-treated hydrotalcite, zeolites, β-diketones, and fatty acid metal salts; mold release agents; dusting agents other than the vinyl chloride resin fine particles; and other additives.

### «Other plasticizers»

In addition to (b) the trimellitate and (c) the pyromellitate, any one or more other plasticizers (e.g. primary plasticizer, secondary plasticizer, etc.) may be used in the vinyl chloride resin composition. In a situation in which a secondary plasticizer is used, a primary plasticizer of equivalent or greater mass is preferably used in combination with the secondary plasticizer. Examples of so-called primary plasticizers include:
phthalic acid derivatives such as dimethyl phthalate, diethyl phthalate, dibutyl phthalate, di(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, butyl benzyl phthalate, dinonyl phthalate, and dicyclohexyl phthalate;
isophthalic acid derivatives such as dimethyl isophthalate, di(2-ethylhexyl) isophthalate, and diisooctyl isophthalate;
tetrahydrophthalic acid derivatives such as di(2-ethylhexyl) tetrahydrophthalate, di-n-octyl tetrahydrophthalate, and diisodecyl tetrahydrophthalate;
adipic acid derivatives such as di-n-butyl adipate, di(2-ethylhexyl) adipate, diisodecyl adipate, and diisononyl adipate;
azelaic acid derivatives such as di(2-ethylhexyl) azelate, diisooctyl azelate, and di-n-hexyl azelate;
sebacic acid derivatives such as di-n-butyl sebacate, di(2-ethylhexyl) sebacate, diisodecyl sebacate, and di(2-butyloctyl) sebacate;
maleic acid derivatives such as di-n-butyl maleate, dimethyl maleate, diethyl maleate, and di(2-ethylhexyl) maleate;
fumaric acid derivatives such as di-n-butyl fumarate and di(2-ethylhexyl) fumarate;
citric acid derivatives such as triethyl citrate, tri-n-butyl citrate, acetyl triethyl citrate, and acetyl tri(2-ethylhexyl) citrate;
itaconic acid derivatives such as monomethyl itaconate, monobutyl itaconate, dimethyl itaconate, diethyl itaconate, dibutyl itaconate, and di(2-ethylhexyl) itaconate;
oleic acid derivatives such as butyl oleate, glyceryl monooleate, and diethylene glycol monooleate;
ricinoleic acid derivatives such as methyl acetyl ricinoleate, butyl acetyl ricinoleate, glyceryl monoricinoleate, and diethylene glycol monoricinoleate;
stearic acid derivatives such as n-butyl stearate and diethylene glycol distearate (except 12-hydroxystearic acid ester);
other fatty acid derivatives such as diethylene glycol monolaurate, diethylene glycol dipelargonate, and pentaerythritol fatty acid esters;
phosphoric acid derivatives such as triethyl phosphate, tributyl phosphate, tri(2-ethylhexyl) phosphate, tributoxyethyl phosphate, triphenyl phosphate, cresyl diphenyl phosphate, tricresyl phosphate, trixylenyl phosphate, and tris(chloroethyl) phosphate;
glycol derivatives such as diethylene glycol dibenzoate, dipropylene glycol dibenzoate, triethylene glycol dibenzoate, triethylene glycol di(2-ethylbutyrate), triethylene glycol di(2-ethylhexanoate), and dibutyl methylenebisthioglycolate;
glycerin derivatives such as glycerol monoacetate, glycerol triacetate, and glycerol tributyrate;
epoxy derivatives such as epoxy hexahydro diisodecyl phthalate, epoxy triglyceride, epoxidized octyl oleate, and epoxidized decyl oleate; and
polyester plasticizers such as adipic acid polyesters, sebacic acid polyesters, and phthalic acid polyesters.

Examples of so-called secondary plasticizers include epoxidized vegetable oils such as epoxidized soybean oil and epoxidized linseed oil; chlorinated paraffin; fatty acid esters of glycol such as triethylene glycol dicaprylate; butyl epoxy stearate; phenyl oleate; and methyl dihydroabietate.

Of the other plasticizers described above, epoxidized soybean oil is preferably used in combination with (b) the trimellitate and (c) the pyromellitate.

The amount of the other plasticizers described above relative to 100 parts by mass of (a) the vinyl chloride resin is preferably 0.1 parts by mass or more, more preferably 0.5 parts by mass or more, and further preferably 1 parts by mass or more, and preferably 30 parts by mass or less, more preferably 20 parts by mass or less, and further preferably 10 parts by mass or less. As a result of the amount of the other plasticizers being in the range described above, a vinyl chloride resin molded product having more favorable tensile elongation at low temperature can be produced more easily.

### «Perchloric acid-treated hydrotalcite»

The perchloric acid-treated hydrotalcite that may be included in the vinyl chloride resin composition can be, as perchloric acid-introduced hydrotalcite, easily produced by, for example, addition and stirring of hydrotalcite with a dilute aqueous solution of perchloric acid, followed by filtration, dehydration, and drying as required. Through this process, at least some of the carbonate anions (CO₃²) in the hydrotalcite are substituted with perchlorate anions (ClO₄) (note that 2 mol of perchlorate anions are substituted per 1 mol of carbonate anions). The molar ratio of hydrotalcite and perchloric acid may be freely set, although a ratio of 0.1 mol or more and 2 mol or less of perchloric acid relative to 1 mol of hydrotalcite is preferable.

The substitution ratio of carbonate anions in the untreated (unsubstituted with no introduction of perchlorate anions) hydrotalcite by perchlorate anions is preferably 50 mol% or more, more preferably 70 mol% or more, and particularly preferably 85 mol% or more. Moreover, the substitution ratio of carbonate anions in the untreated (unsubstituted with no introduction of perchlorate anions) hydrotalcite by perchlorate anions is preferably 95 mol% or less. As a result of the substitution ratio of carbonate anions in the untreated (unsubstituted with no introduction of perchlorate anions) hydrotalcite by perchlorate anions being in the range described above, a vinyl chloride resin molded product with low peak top temperature of loss modulus E" in an initial stage and after a heat aging test can be produced more easily, while ensuring tensile elongation at low temperature.

Hydrotalcite is a non-stoichiometric compound represented by a general formula: [Mg₁₋ₓAlₓ(OH)₂]^{x+}[(CO₃)_{x/2}·MH₂O]^{x-}, and is an inorganic substance having a layered crystal structure formed by a positively charged basic layer of [Mg₁₋ₓAlₓ(OH)₂]^{x+} and a negatively charged intermediate layer of [(CO₃)_{x/2}·mH₂O]^{x-}. In the general formula shown above, x represents a number that is greater than 0 and no greater than 0.33. Natural hydrotalcite is represented by Mg₆Al₂(OH)₁₆CO₃·4H₂O. On the other hand, a synthetic hydrotalcite represented by Mg_{4.5}Al₂(OH)₁₃CO₃·3.5H₂O is commercially available. Synthetic hydrotalcite can for example be synthesized by a method described in JP S61-174270 A.

The amount of the perchloric acid-treated hydrotalcite is not limited. The amount of the perchloric acid-treated hydrotalcite relative to 100 parts by mass of (a) the vinyl chloride resin is preferably 0.5 parts by mass or more, more preferably 1 parts by mass or more, and further preferably 1.5 parts by mass or more, and preferably 7 parts by mass or less and more preferably 6 parts by mass or less. As a result of the amount of the perchloric acid-treated hydrotalcite being in the range described above, the tensile elongation of a vinyl chloride resin molded product formed through molding of the vinyl chloride resin composition can be maintained more favorably.

### «Zeolite»

The vinyl chloride resin composition may include a zeolite as a stabilizer. A zeolite is a compound represented by a general formula: M_{x/n}·[(AlO₂)ₓ·(SiO₂)_{y}]·zH₂O (in the general formula, M is a metal ion of valency n, x + y is the number of tetrahedra per unit cell, and z is the number of moles of water). Examples of M in the general formula include monovalent and divalent metals such as Na, Li, Ca, Mg, and Zn, and mixtures thereof.

The amount of the zeolite is not limited. The amount of the zeolite relative to 100 parts by mass of (a) the vinyl chloride resin is preferably 0.1 parts by mass or more, and preferably 5 parts by mass or less.

### <<β-diketone>>

A β-diketone can be used to effectively suppress variation in initial color of a vinyl chloride resin molded product obtained through molding of the vinyl chloride resin composition. Specific examples of β-diketones include dibenzoylmethane, stearoylbenzoylmethane, and palmitoylbenzoylmethane. Any one of these β-diketones may be used alone or a combination of any two or more of these β-diketones may be used.

The amount of the β-diketone is not limited. The amount of the β-diketone relative to 100 parts by mass of (a) the vinyl chloride resin is preferably 0.01 parts by mass or more, and preferably 5 parts by mass or less.

### «Fatty acid metal salt»

The vinyl chloride resin composition may contain a fatty acid metal salt. The fatty acid metal salt is not limited, and may be any fatty acid metal salt. The fatty acid metal salt is preferably a metal salt of a monobasic fatty acid, more preferably a metal salt of a monobasic fatty acid having a carbon number of 12 to 24, and even more preferably a metal salt of a monobasic fatty acid having a carbon number of 15 to 21. Specific examples of the fatty acid metal salt include lithium stearate, magnesium stearate, aluminum stearate, calcium stearate, strontium stearate, barium stearate, zinc stearate, calcium laurate, barium laurate, zinc laurate, barium 2-ethylhexanoate, zinc 2-ethylhexanoate, barium ricinoleate, and zinc ricinoleate. The metal in the fatty acid metal salt is preferably a metal that can produce polyvalent cations, more preferably a metal that can produce divalent cations, even more preferably a metal from periods 3 to 6 of the periodic table that can produce divalent cations, and particularly preferably a metal from period 4 of the periodic table that can produce divalent cations. The fatty acid metal salt is most preferably zinc stearate.

The amount of the fatty acid metal salt is not limited. The amount of the fatty acid metal salt relative to 100 parts by mass of (a) the vinyl chloride resin is preferably 0.05 parts by mass or more and more preferably 0.1 parts by mass or more, and preferably 5 parts by mass or less, more preferably 1 parts by mass or less, and further preferably 0.5 parts by mass or less. As a result of the amount of the fatty acid metal salt being in the range described above, the color difference value of the vinyl chloride resin composition and the vinyl chloride resin molded product can be further reduced.

### «Mold release agent»

The mold release agent is not limited, and examples include 12-hydroxystearic acid-based lubricants such as a 12-hydroxystearic acid ester and a 12-hydroxystearic acid oligomer. The content of the mold release agent is not limited, and may be 0.01 parts by mass or more and 5 parts by mass or less relative to 100 parts by mass of (a) the vinyl chloride resin.

### «Other dusting agents»

Examples of other dusting agents (powder fluidity modifiers) besides the vinyl chloride resin fine particles that may be included in the vinyl chloride resin composition include: inorganic fine particles such as calcium carbonate, talc, and aluminum oxide; and organic fine particles such as polyacrylonitrile resin fine particles, poly(meth)acrylate resin fine particles, polystyrene resin fine particles, polyethylene resin fine particles, polypropylene resin fine particles, polyester resin fine particles, and polyamide resin fine particles. Among these examples, inorganic fine particles having an average particle diameter of 10 nm or more and 100 nm or less are preferable.

The amount of the other dusting agents is not limited. The amount of the other dusting agents relative to 100 parts by mass of (a) the vinyl chloride resin is preferably 30 parts by mass or less and more preferably 25 parts by mass or less, and may be 10 parts by mass or more. One of these other dusting agents may be used individually, or two or more of these other dusting agents may be used in combination. The other dusting agents may be used together with the aforementioned vinyl chloride resin fine particles.

### «Other additives»

Other additives that may be contained in the vinyl chloride resin composition are not limited. Examples include colorants (pigments), impact modifiers, perchloric acid compounds other than perchloric acid-treated hydrotalcite (for example, sodium perchlorate and potassium perchlorate), antioxidants, fungicides, flame retardants, antistatic agents, fillers, light stabilizers, and foaming agents.

Specific examples of colorants (pigments) include quinacridone pigments, perylene pigments, condensed polyazo pigments, isoindolinone pigments, copper phthalocyanine pigments, titanium white, and carbon black. Any one of these pigments or any two or more of these pigments may be used.

A quinacridone pigment is obtained through concentrated sulfuric acid treatment of a p-phenylene dianthranilic acid and has a hue from yellowish red to reddish purple. Specific examples of quinacridone pigments include quinacridone red, quinacridone magenta, and quinacridone violet.

A perylene pigment is obtained through a condensation reaction of perylene-3,4,9,10-tetracarboxylic anhydride and an aromatic primary amine and has a hue from red to red-purple/brown. Specific examples of perylene pigments include perylene red, perylene orange, perylene maroon, perylene vermilion, and perylene bordeaux.

A condensed polyazo pigment is obtained through condensation of an azo pigment in a solvent to achieve a high molecular weight and has a hue of a yellow or red pigment. Specific examples of condensed polyazo pigments include polyazo red, polyazo yellow, chromophthal orange, chromophthal red, and chromophthal scarlet.

An isoindolinone pigment is obtained through a condensation reaction of 4,5,6,7-tetrachloroisoindolinone and an aromatic primary diamine and has a hue from greenish yellow to red/brown. A specific example of an isoindolinone pigment is isoindolinone yellow.

A copper phthalocyanine pigment is a pigment in which copper is coordinated with a phthalocyanine and has a hue from yellowish green to bright blue. Specific examples of copper phthalocyanine pigments include phthalocyanine green and phthalocyanine blue.

Titanium white is a white pigment made from titanium dioxide. Titanium white has high opacity and exists in anatase form and rutile form.

Carbon black is a black pigment having carbon as a main component and also including oxygen, hydrogen, and nitrogen. Specific examples of carbon black include thermal black, acetylene black, channel black, furnace black, lamp black, and bone black.

Specific examples of impact modifiers include an acrylonitrile-butadiene-styrene copolymer, a methyl methacrylate-butadiene-styrene copolymer, a chlorinated polyethylene, an ethylene-vinyl acetate copolymer, and a chlorosulfonated polyethylene. One impact modifier or two or more impact modifiers may be used in the vinyl chloride resin composition. Note that the impact modifier is dispersed as a heterogeneous phase of fine elastic particles in the vinyl chloride resin composition. In the vinyl chloride resin composition, polar groups and chains graft polymerized with the elastic particles are compatible with (a) the vinyl chloride resin and improve impact resistance of the vinyl chloride resin molded product obtained using the vinyl chloride resin composition.

Specific examples of antioxidants include phenolic antioxidants, sulfuric antioxidants, and phosphoric antioxidants such as phosphite.

Specific examples of fungicides include aliphatic ester-based fungicides, hydrocarbon-based fungicides, organic nitrogen-based fungicides, and organic nitrogen sulfur-based fungicides.

Specific examples of flame retardants include halogen-containing flame retardants such as chlorinated paraffin; phosphoric flame retardants such as phosphoric acid esters; and inorganic hydroxides such as magnesium hydroxide and aluminum hydroxide.

Specific examples of antistatic agents include anionic antistatic agents such as fatty acid salts, higher alcohol sulfuric acid esters, and sulfonic acid salts; cationic antistatic agents such as aliphatic amine salts and quaternary ammonium salts; and non-ionic antistatic agents such as polyoxyethylene alkyl ethers and polyoxyethylene alkyl phenol ethers.

Specific examples of fillers include silica, talc, mica, calcium carbonate, and clay.

Specific examples of light stabilizers include ultraviolet absorbers based on benzotriazoles, benzophenone, and nickel chelate, and hindered amine light stabilizers.

Specific examples of foaming agents include organic foaming agents such as azo compounds (for example, azodicarbonamides and azobisisobutyronitrile), nitroso compounds (for example, N,N'-dinitrosopentamethylenetetramine), and sulfonyl hydrazide compounds (for example p-toluenesulfonyl hydrazide and p,p-oxybis(benzenesulfonyl hydrazide)); and gaseous foaming agents such as chlorofluorocarbons, carbon dioxide gas, water, and volatile hydrocarbon compounds (for example, pentane), and microcapsules containing any of these gaseous foaming agents.

### <Production method of vinyl chloride resin composition>

The presently disclosed vinyl chloride resin composition can be produced by mixing the components described above.

No specific limitations are placed on the method used to mix (a) the vinyl chloride resin, (b) the trimellitate, (c) the pyromellitate, and (d) the silicone oil and additives used as required. One example of the mixing method involves mixing the components with the exception of the dusting agent including the vinyl chloride resin fine particles and other dusting agents by dry blending and subsequently adding and mixing in the dusting agent. The dry blending is preferably carried out using a Henschel mixer. The temperature during dry blending is not limited, and is preferably 50 °C or more and more preferably 70 °C or more, and preferably 200 °C or less.

### <Use of vinyl chloride resin composition>

The obtained vinyl chloride resin composition can be suitably used in powder molding, and more suitably used in powder slush molding.

### (Vinyl chloride resin molded product)

A presently disclosed vinyl chloride resin molded product is obtained through molding of the vinyl chloride resin composition described above by any method. Since the presently disclosed vinyl chloride resin molded product is obtained using the presently disclosed vinyl chloride resin composition, its peak top temperature of loss modulus E" in an initial stage and after a heat aging test is sufficiently low, while maintaining favorable tensile elongation at low temperature. The presently disclosed vinyl chloride resin molded product is therefore suitable for use as an automobile interior material, e.g. a surface skin of an automobile interior part such as an automobile instrument panel or a door trim, and particularly suitable for use as a surface skin of an automobile instrument panel.

### «Method of molding vinyl chloride resin molded product»

The mold temperature during powder slush molding is not limited, and is preferably 200 °C or more and more preferably 220 °C or more, and preferably 300 °C or less and more preferably 280 °C or less.

In production of the vinyl chloride resin molded product, for example, the following method may be used without being limited thereto: The presently disclosed vinyl chloride resin composition is sprinkled onto a mold having a temperature in the aforementioned range. The vinyl chloride resin composition is initially left for 5 seconds or more and 30 seconds or less and, after shaking off any excess vinyl chloride resin composition, is then further left for 30 seconds or more and 3 minutes or less at a given temperature. The mold is subsequently cooled to 10 °C or more and 60 °C or less, and the presently disclosed vinyl chloride resin molded product obtained thereby is removed from the mold. The removed vinyl chloride resin molded product is, for example, yielded as a sheet-like molded product having the shape of the mold.

### (Laminate)

A presently disclosed laminate comprises a foamed polyurethane molded product and the vinyl chloride resin molded product described above. Since the presently disclosed laminate includes the vinyl chloride resin molded product formed using the presently disclosed vinyl chloride resin composition, the peak top temperature of loss modulus E" in an initial stage and after a heat aging test can be lowered sufficiently, while favorably maintaining tensile elongation at low temperature. The presently disclosed laminate is therefore suitable for use as an automobile interior material for an automobile interior part such as an automobile instrument panel or a door trim, and particularly suitable for use as an automobile instrument panel.

The stacking method is not limited. Examples of stacking methods that can be adopted include: (1) a method in which the foamed polyurethane molded product and the vinyl chloride resin molded product are prepared separately and are subsequently joined together by, for example, thermal fusion bonding, thermal adhesion, or using a commonly known adhesive; and (2) a method in which raw materials of the foamed polyurethane molded product such as an isocyanate and a polyol are caused to react on the vinyl chloride resin molded product so as to polymerize while carrying out polyurethane foaming by a commonly known method to directly form the foamed polyurethane molded product on the vinyl chloride resin molded product. The latter method (2) is more suitable because it involves a simple process and enables laminates of various different shapes to be obtained while facilitating firm adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

The following methods were used to measure and evaluate the average degrees of polymerization and average particle diameters of vinyl chloride resin particles and vinyl chloride resin fine particles, the straight chain ratios of alkyl groups of (b) the trimellitate and (c) the pyromellitate and the percentage contents of alkyl groups having respective carbon numbers, the blocking resistance of a vinyl chloride resin composition, the tensile elongation at low temperature of a vinyl chloride resin molded product in an initial stage and after heating (heat aging test), and the loss modulus peak top temperature of the vinyl chloride resin molded product in an initial stage and after heating (heat aging test).

### <Average degree of polymerization>

The average degree of polymerization of each of the vinyl chloride resin particles and the vinyl chloride resin fine particles were calculated by measuring the viscosity of a solution of the vinyl chloride resin particles or vinyl chloride resin fine particles dissolved in cyclohexanone in accordance with JIS K6720-2.

### <Average particle diameter>

The average particle diameter (volume-average particle diameter (µm)) of each of the vinyl chloride resin particles and the vinyl chloride resin fine particles was measured in accordance with JIS Z8825. Specifically, the average particle diameter of each of the vinyl chloride resin particles and the vinyl chloride resin fine particles was calculated by dispersing the vinyl chloride resin particles or vinyl chloride resin fine particles in a water tank and then using the device indicated below to measure and analyze a light diffraction-scattering intensity distribution, and thereby measure particle diameters and a volume-based particle diameter distribution.
- Device: Laser diffraction particle size analyzer (SALD-2300, produced by Shimadzu Corporation)
- Measurement method: Laser diffraction and scattering
- Measurement range: 0.017 µm to 2500 µm
- Light source: Semiconductor laser (wavelength 680 nm, output 3 mW).

### <Straight chain ratio>

The straight chain ratio (mol%) of each alkyl group (R₅, R₆, and R₇) of (b) the trimellitate and the total straight chain ratio (mol%) of the alkyl groups (R₁ to R₄) of (c) the pyromellitate were measured using liquid chromatography.

### <Percentage contents of alkyl groups having respective carbon numbers>

The percentage contents (mol%) of alkyl groups having respective carbon numbers relative to the total alkyl groups of R₅ to R₇ of (b) the trimellitate and the percentage contents (mol%) of alkyl groups having respective carbon numbers relative to the total alkyl groups of R₁ to R₄ of (c) the pyromellitate were measured using gas chromatography.

### <Blocking resistance>

The blocking resistance of the vinyl chloride resin composition was evaluated as follows. 80 g of the obtained vinyl chloride resin composition was put into a beaker (200 ml) defined in JIS R3503. The beaker containing the vinyl chloride resin composition was then placed on a horizontal stand, and a weight of 1 kg with a smooth bottom of ϕ58 mm was directly placed on the vinyl chloride resin composition and left in a room temperature environment (temperature: 23 °C, relative humidity: 50 %) for 1 hour, to apply pressure to the vinyl chloride resin composition. After this, the weight was removed. While bringing a 15 cm × 15 cm plain-woven wire netting (wire diameter: 1.0 mm, aperture: 9.16 mm × 9.16 mm, 2.5 mesh) into close contact with the open part of the beaker, the vinyl chloride resin composition was turned over on the flat stand together with the beaker, and then the beaker was removed. Next, the plain-woven wire netting was gently lifted, and the weight of the vinyl chloride resin composition remaining on the lifted plain-woven wire netting was measured. Lower weight of the vinyl chloride resin composition remaining on the wire netting indicates higher blocking resistance and better powder storing property.

### <Tensile elongation at low temperature>

### «Initial stage»

The obtained vinyl chloride resin molded sheet was punched with a No. 1 dumbbell prescribed by JIS K6251, and the tensile breaking elongation (%) at a low temperature of -20 °C was measured in accordance with JIS K7161 at a tension rate of 200 mm/minute. Higher tensile breaking elongation indicates better ductility at low temperature of the vinyl chloride resin molded product in an initial stage (after molding and before heating).

### «After heating (heat aging test)»

A laminate lined with a foamed polyurethane layer was used as a sample. The sample was placed in an oven, and heated for 600 hours at a temperature of 130 °C. Thereafter, the foamed polyurethane layer was peeled from the heated sample, to obtain a vinyl chloride resin molded sheet alone. The tensile breaking elongation (%) of the vinyl chloride resin molded sheet after 600 hours of heating was then measured under the same conditions as in the initial stage. Higher tensile breaking elongation at a temperature of -20 °C indicates better ductility at low temperature of the vinyl chloride resin molded product after heating (heat aging test).

### <Loss modulus peak top temperature>

### «Initial stage»

The obtained vinyl chloride resin molded sheet was punched to dimensions of width 10 mm × length 40 mm, to yield a measurement sample. Then, the peak top temperature (°C) of loss modulus E" of the measurement sample was measured in accordance with JIS K7244-4 at a frequency of 10 Hz, a heating rate of 2 °C/minute, and a measurement temperature range of -90 °C to +100 °C. Lower loss modulus peak top temperature indicates better ductility at low temperature of the vinyl chloride resin molded product in an initial stage (after molding and before heating).

### «After heating»

A laminate lined with a foamed polyurethane layer was used as a sample. The sample was placed in an oven, and heated for 600 hours at a temperature of 130 °C. Thereafter, the foamed polyurethane layer was peeled from the heated sample, to obtain a vinyl chloride resin molded sheet alone. The peak top temperature (°C) of loss modulus E" of the vinyl chloride resin molded sheet after 600 hours of heating was then measured under the same conditions as in the initial stage. Lower loss modulus peak top temperature indicates better ductility at low temperature of the vinyl chloride resin molded product after heating (heat aging test).

### (Example 1)

### <Production of vinyl chloride resin composition>

Ingredients shown in Table 1 with the exception of plasticizers (trimellitate, straight chain pyromellitate, and epoxidized soybean oil) and vinyl chloride resin fine particles obtained by emulsion polymerization and used as a dusting agent were added into a Henschel mixer and mixed. The plasticizers were all added to the mixture after increasing the temperature of the mixture to 80 °C, and the mixture was further heated to be dried up (i.e., the mixture changed to a dry state through absorption of the plasticizers by vinyl chloride resin particles used as vinyl chloride resin). Thereafter, once the dried-up mixture had been cooled to a temperature of 100 °C or lower, the vinyl chloride resin fine particles obtained by emulsion polymerization used as the dusting agent were added to the mixture to yield a vinyl chloride resin composition.

The blocking resistance of the resultant vinyl chloride resin composition was measured by the above-mentioned method. The results are shown in Table 1.

In the pyromellitate used in the preparation of the vinyl chloride resin composition, the total straight chain ratio of R₁, R₂, R₃, and R₄ was 100 mol%. The total percentage content of an alkyl group having a carbon number of 6 was 10 mol%, the total percentage content of an alkyl group having a carbon number of 8 was 40 mol%, the total percentage content of an alkyl group having a carbon number of 10 was 50 mol%, relative to the total alkyl groups of R₁ to R₄.

In the trimellitate used in the preparation of the vinyl chloride resin composition, the straight chain ratios of R₅ to R₇ were all 100 mol%, and the total percentage content of an alkyl group having a carbon number of 8 in R₅ to R₇ was 100 mol%.

### <Production of vinyl chloride resin molded product>

The resultant vinyl chloride resin composition was sprinkled onto a textured mold that was heated to a temperature of 250 °C and, after being left to melt for a given time of about 10 seconds to 20 seconds, excess vinyl chloride resin composition was shaken off. Next, the textured mold sprinkled with the vinyl chloride resin composition was placed in an oven set to a temperature of 200 °C and, once 60 seconds had passed from the placement, was cooled with cooling water. Once the mold had cooled to 40 °C, a vinyl chloride resin molded sheet of 145 mm × 175 mm × 1 mm was removed from the mold as a vinyl chloride resin molded product.

The tensile elongation at low temperature and the loss modulus peak top temperature in an initial stage (after molding and before heating) of the resultant vinyl chloride resin molded sheet were measured and calculated by the above-mentioned methods. The results are shown in Table 1.

### <Formation of laminate>

Two obtained vinyl chloride resin molded sheets were placed in a mold of 200 mm × 300 mm × 10 mm such as not to overlap one another and with the textured surface underneath.

Separately, a polyol mixture was obtained by mixing 50 parts of a propylene glycol PO (propylene oxide) / EO (ethylene oxide) block adduct (hydroxyl value 28, terminal EO unit content 10 %, internal EO unit content 4 %), 50 parts of a glycerin PO/EO block adduct (hydroxyl value 21, terminal EO unit content 14 %), 2.5 parts of water, 0.2 parts of an ethylene glycol solution of triethylenediamine (product name: TEDA-L33 produced by Tosoh Corporation), 1.2 parts of triethanolamine, 0.5 parts of triethylamine, and 0.5 parts of a foam stabilizer (product name: F-122 produced by Shin-Etsu Chemical Co., Ltd.). The obtained polyol mixture was mixed with polymethylene polyphenylene polyisocyanate (polymeric MDI) in a ratio determined to give an isocyanate index of 98, to prepare a mixed solution. The prepared mixed solution was poured onto each of the two vinyl chloride resin molded sheets that had been placed in the mold as described above. Thereafter, the mold was covered with a 348 mm × 255 mm × 10 mm aluminum plate to seal the mold. After the mold had been sealed for 5 minutes, a laminate formed by the vinyl chloride resin molded sheet (thickness: 1 mm) as a surface skin lined with a foamed polyurethane molded product (thickness: 9 mm, density: 0.18 g/cm³) was formed in the mold.

The formed laminate was then removed from the mold, and the tensile elongation at low temperature and the peak top temperature of loss modulus E" after heating (heat aging test) were measured and calculated by the above-mentioned methods. The results are shown in Table 1.

### (Example 2)

A vinyl chloride resin composition, a vinyl chloride resin molded sheet, and a laminate were produced in the same way as in Example 1 with the exception that, in the preparation of the vinyl chloride resin composition, the blending amount of trimellitate was changed to 120 parts, the blending amount of straight chain pyromellitate was changed to 40 parts, and the blending amount of 12-hydroxystearic acid was changed to 0.2 parts, as shown in Table 1.

The measurement and calculation were performed by the same methods as in Example 1. The results are shown in Table 1.

### (Example 3)

A vinyl chloride resin composition, a vinyl chloride resin molded sheet, and a laminate were produced in the same way as in Example 1 with the exception that, in the preparation of the vinyl chloride resin composition, the blending amount of trimellitate was changed to 130 parts, the blending amount of straight chain pyromellitate was changed to 30 parts, and the blending amount of 12-hydroxystearic acid was changed to 0.2 parts, as shown in Table 1.

The measurement and calculation were performed by the same methods as in Example 1. The results are shown in Table 1.

### (Example 4)

A vinyl chloride resin composition, a vinyl chloride resin molded sheet, and a laminate were produced in the same way as in Example 1 with the exception that, in the preparation of the vinyl chloride resin composition, vinyl chloride resin particles having a different average degree of polymerization from the vinyl chloride resin particles in Example 1 were used as vinyl chloride resin particles, only one type of vinyl chloride resin fine particles having a different average degree of polymerization from the vinyl chloride resin fine particles in Example 1 were used as vinyl chloride resin fine particles, and the blending amount of trimellitate was changed to 130 parts, the blending amount of straight chain pyromellitate was changed to 30 parts, and the blending amount of 12-hydroxystearic acid was changed to 0.2 parts, as shown in Table 1.

The measurement and calculation were performed by the same methods as in Example 1. The results are shown in Table 1.

### (Example 5)

A vinyl chloride resin composition, a vinyl chloride resin molded sheet, and a laminate were produced in the same way as in Example 4 with the exception that, in the preparation of the vinyl chloride resin composition, the blending amount of trimellitate was changed to 110 parts, and the blending amount of straight chain pyromellitate was changed to 40 parts.

The measurement and calculation were performed by the same methods as in Example 1. The results are shown in Table 1.

### (Comparative Example 1)

A vinyl chloride resin composition, a vinyl chloride resin molded sheet, and a laminate were produced in the same way as in Example 1 with the exception that, in the preparation of the vinyl chloride resin composition, branched pyromellitate was used instead of straight chain pyromellitate, and the blending amount of perchloric acid-introduced hydrotalcite was changed to 4.5 parts, as shown in Table 1.

The measurement and calculation were performed by the same methods as in Example 1. The results are shown in Table 1.

### (Comparative Example 2)

A vinyl chloride resin composition, a vinyl chloride resin molded sheet, and a laminate were produced in the same way as in Example 1 with the exception that, in the preparation of the vinyl chloride resin composition, the blending amount of trimellitate was changed to 140 parts, the blending amount of straight chain pyromellitate was changed to 20 parts, and the blending amount of 12-hydroxystearic acid was changed to 0.2 parts, as shown in Table 1.

The measurement and calculation were performed by the same methods as in Example 1. The results are shown in Table 1.

### (Comparative Example 3)

A vinyl chloride resin composition, a vinyl chloride resin molded sheet, and a laminate were produced in the same way as in Example 4 with the exception that, in the preparation of the vinyl chloride resin composition, branched pyromellitate was used instead of straight chain pyromellitate, as shown in Table 1.

The measurement and calculation were performed by the same methods as in Example 1. The results are shown in Table 1.

| | | | | Example 1 | Example 2 | Example 3 | Example 4 | Example 5 | Comparative Example 1 | Comparative Example 2 | Comparative Example 3 |
|---|---|---|---|---|---|---|---|---|---|---|---|
| | Substrate | (a) Vinyl chloride resin particles [parts by mass] | | 100 | 100 | 100 | - | - | 100 | 100 | - |
| | | (a) Vinyl chloride resin particles²⁾ [parts by mass] | | - | - | - | 100 | 100 | - | - | 100 |
| | Plasticizer | (b) Trimellitate³⁾ [parts by mass] | | 80 | 120 | 130 | 130 | 110 | 80 | 140 | 130 |
| | | (c) Straight chain pyromellitate⁴⁾ [parts by mass] | | 80 | 40 | 30 | 30 | 40 | - | 20 | - |
| | | Branched pyromellitate⁵⁾ [parts by mass] | | - | - | - | - | - | 80 | - | 30 |
| | | Epoxidized soybean oil⁶⁾ [parts by mass] | | 5 | 5 | 5 | 5 | 5 | 5 | 5 | 5 |
| | Stabilizer | Perchloric acid-introduced hydrotalcite⁷⁾ [parts by mass] | | 6.5 | 6.5 | 6.5 | 6.5 | 6.5 | 4.5 | 6.5 | 6.5 |
| Vinyl chloride resin composition | | Zeolite⁸⁾ [parts by mass] | | 2.4 | 2.4 | 2.4 | 2.4 | 2.4 | 2.4 | 2.4 | 2.4 |
| | | P-dketone⁹⁾ [parts by mass] | | 0.5 | 0.5 | 0.5 | 0.5 | 0.5 | 0.5 | 0.5 | 0.5 |
| | | Zinc stearate¹⁰⁾ [parts by mass] | | 0.2 | 0.2 | 0.2 | 0.2 | 0.2 | 0.2 | 0.2 | 0.2 |
| | Mold release agent | 12-hydroxystearic acid¹¹⁾ [parts by mass] | | 0.4 | 0.2 | 0.2 | 0.2 | 0.2 | 0.4 | 0.2 | 0.2 |
| | Moldability modifier | (d) Silicone oil ¹²⁾ [parts by mass] | | 0.5 | 0.5 | 0.5 | 0.5 | 0.5 | 0.5 | 0.5 | 0.5 |
| | Dusting agent | (a) Vinyl chloride resin fine particles¹³⁾ [parts by mass] | | 11 | 11 | 11 | - | - | 11 | 11 | - |
| | | (a) Vinyl chloride resin fine particles¹⁴⁾ [parts by mass] | | - | - | - | 22 | 22 | - | - | 22 |
| | | (a) Vinyl chloride resin fine particles¹⁵⁾ [parts by mass] | | 11 | 11 | 11 | - | - | 11 | 11 | - |
| | Colorant | Carbon black pigment¹⁶⁾ [parts by mass] | | 5 | | 5 | 5 | 5 | 5 | 5 | 5 |
| | Percentage content of (c) straight chain pyromellitate [mass% vs. total content of (b) trimellitate and (c) straight chain pyromellitate] | | | 50.0 | 25.0 | 18.8 | 18.8 | 26.7 | - | 12.5 | - |
| | Total content of (b) trimellitate and (c) straight chain pyromellitate [parts by mass vs. 100 parts by mass of (a) vinyl chloride resin] | | | 131 | 131 | 131 | 131 | 123 | 66 | 131 | 107 |
| | Content of (d) silicone oil [parts by mass vs. 100 parts by mass of (c) straight chain pyromellitate] | | | 0.63 | 1.25 | 1.67 | 1.67 | 1.25 | - | 2.50 | - |
| Evaluation category | Blocking resistance [g] | | | 21 | 5 | 8 | 8 | 3 | 0 | 0 | 4 |
| | Tensile elongation at low temperature (-20°C) [%] | | Initial | 280 | 290 | 280 | 280 | 280 | 290 | 280 | 270 |
| | | | After heating (600hr) | 190 | 170 | 170 | 170 | 160 | 190 | 170 | 180 |
| | Peak top temperature of loss modulus E"[°C] | | Initial | -51 | -53 | -53 | -52 | -49 | -45 | -53 | -51 |
| | | | After heating (600hr) | -37 | -33 | -31 | -33 | -31 | -29 | -27 | -29 |

1) product name "TH-2800" produced by Taiyo Vinyl Corporation (suspension polymerization, average degree of polymerization: 2800, average particle diameter: 130 µm)
2) product name "TH-2500" produced by Taiyo Vinyl Corporation (suspension polymerization, average degree of polymerization: 2500, average particle diameter: 129 µm)
3) product name "TRIMEX N-08" produced by Kao Corporation
4) product name "ADK CIZER UL-100" produced by ADEKA Corporation (R₁ to R₄ are alkyl groups having a carbon number of 6, 8, or 10, total straight chain ratio of R₁ to R₄: 100 mol%)
5) product name "ADK CIZER UL-80" produced by ADEKA Corporation (R₁ to R₄ are alkyl groups having a carbon number of 8, total straight chain ratio of R₁ to R₄: 0 mol%)
6) product name "ADK CIZER O-130S" produced by ADEKA Corporation
7) product name "ALCAMIZER^{®} 5" (ALCAMIZER is a registered trademark in Japan, other countries, or both) produced by Kyowa Chemical Industry Co., Ltd.
8) product name "MIZUKALIZER DS" produced by Mizusawa Industrial Chemicals, Ltd.
9) product name "Karenz DK-1" produced by Showa Denko K.K.
10) product name "SAKAI SZ2000" produced by Sakai Chemical Industry Co., Ltd.
11) product name "ADK STAB LS-12" produced by ADEKA Corporation
12) product name "KF-9701" produced by Shin-Etsu Silicone (silanol both-end-modified silicone oil)
13) product name "ZEST^{®} PQLTX" (ZEST is a registered trademark in Japan, other countries, or both) produced by Shin Dai-ichi Vinyl Corporation (emulsion polymerization, average degree of polymerization: 800, average particle diameter: 1.8 µm)
14) product name "Ryuron paste^{®} 860" (Ryuron paste is a registered trademark in Japan, other countries, or both) produced by Tosoh Corporation (emulsion polymerization, average degree of polymerization: 1600, average particle diameter: 1.6 µm)
15) product name "Ryuron paste^{®} 761" produced by Tosoh Corporation (emulsion polymerization, average degree of polymerization: 2100, average particle diameter: 1.6 µm)
16) product name "DA PX 1720(A) Black" produced by Dainichiseika Color and Chemicals Mfg. Co., Ltd.

As can be understood from Table 1, in Examples 1 to 5 using a straight chain pyromellitate having alkyl groups with the total straight chain ratio of R₁, R₂, R₃, and R₄ in formula (1) being 90 mol% or more, the peak top temperature of loss modulus E" in the initial stage and after the heat aging test, in particular the peak top temperature of loss modulus E" after the heat aging test, was lowered while ensuring favorable tensile elongation at low temperature, as compared with Comparative Examples 1 and 3 using a branched pyromellitate with the straight chain ratio being less than 90 mol%. In Comparative Example 2 in which the percentage content of straight chain pyromellitate was less than the predetermined content, the peak top temperature of loss modulus E" after the heat aging test could not be lowered sufficiently.

### INDUSTRIAL APPLICABILITY

It is therefore possible to provide a vinyl chloride resin molded product that has a low peak top temperature of loss modulus E" in an initial stage and after a heat aging test while ensuring tensile elongation at low temperature.

It is also possible to provide a vinyl chloride resin composition capable of forming the vinyl chloride resin molded product, and a laminate including the vinyl chloride resin molded product.

## Claims

1. A vinyl chloride resin composition comprising:
(a) a vinyl chloride resin;
(b) a trimellitate;
(c) a pyromellitate formed from a compound represented by the following formula (1) 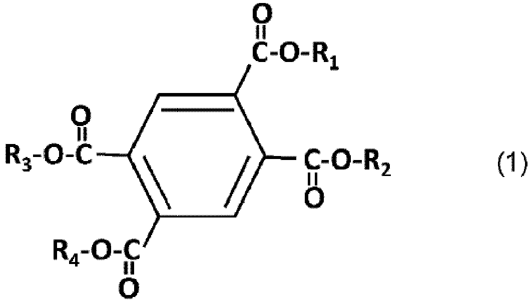 where R₁, R₂, R₃, and R₄ are alkyl groups that may be the same or different, and a total straight chain ratio of R₁, R₂, R₃, and R₄ is 90 mol% or more, and
(d) a silicone oil,
wherein a percentage content of (c) the pyromellitate relative to a total content of (b) the trimellitate and (c) the pyromellitate is 15 mass% or more.

2. The vinyl chloride resin composition according to claim 1,
wherein the percentage content of (c) the pyromellitate relative to the total content of (b) the trimellitate and (c) the pyromellitate is 40 mass% or less.

3. The vinyl chloride resin composition according to claim 1 or 2,
wherein the total content of (b) the trimellitate and (c) the pyromellitate relative to 100 parts by mass of (a) the vinyl chloride resin is 5 parts by mass or more and 200 parts by mass or less.

4. The vinyl chloride resin composition according to any one of claims 1 to 3, wherein a content of (d) the silicone oil relative to 100 parts by mass of (c) the pyromellitate is 0.7 parts by mass or more.

5. Use of the vinyl chloride resin composition according to any one of claims 1 to 4 in powder molding.

6. The use of the vinyl chloride resin composition according to claim 5 in powder slush molding.

7. A vinyl chloride resin molded product comprising the vinyl chloride resin composition according to any one of claims 1 to 4.

8. Use of the vinyl chloride resin molded product according to claim 7 as a surface skin of an automobile instrument panel.

9. A laminate comprising:
a foamed polyurethane molded product; and
the vinyl chloride resin molded product according to claim 7.

## Patentansprüche

1. Eine Vinylchloridharzzusammensetzung, umfassend:
(a) ein Vinylchloridharz;
(b) ein Trimellitat;
(c) ein Pyromellitat, gebildet aus einer Verbindung der folgenden Formel (1) 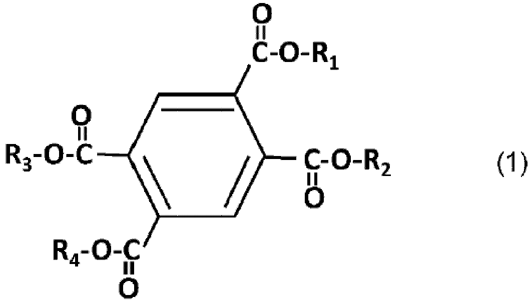 wobei R₁, R₂, R₃ und R₄ Alkylgruppen sind, die gleich oder verschieden sein können, und das Gesamtverhältnis der geraden Ketten von R₁, R₂, R₃ und R₄ 90 Mol-% oder mehr beträgt, und
(d) ein Silikonöl,
wobei der prozentuale Gehalt an (c) dem Pyromellitat im Verhältnis zum Gesamtgehalt an (b) dem Trimellitat und (c) dem Pyromellitat 15 Massen-% oder mehr beträgt.

2. Vinylchloridharzzusammensetzung nach Anspruch 1,
wobei der prozentuale Gehalt an (c) dem Pyromellitat im Verhältnis zum Gesamtgehalt an (b) dem Trimellitat und (c) dem Pyromellitat 40 Massen-% oder weniger beträgt.

3. Vinylchloridharzzusammensetzung nach Anspruch 1 oder 2,
wobei der Gesamtgehalt an (b) dem Trimellitat und (c) dem Pyromellitat bezogen auf 100 Masseteile (a) des Vinylchloridharzes 5 Massneteile oder mehr und 200 Massenteile oder weniger beträgt.

4. Vinylchloridharzzusammensetzung nach einem der Ansprüche 1 bis 3,
wobei der Gehalt an (d) Silikonöl, bezogen auf 100 Massenteile (c) des Pyromellitats, 0,7 Massenteile oder mehr beträgt.

5. Verwendung der Vinylchloridharzzusammensetzung nach einem der Ansprüche 1 bis 4 beim Pulverspritzgießen.

6. Verwendung der Vinylchloridharzzusammensetzung nach Anspruch 5 beim Pulver-Slush-Molding.

7. Vinylchloridharz-Formprodukt, umfassed die Vinylchloridharzzusammen-setzung nach einem der Ansprüche 1 bis 4.

8. Verwendung des Vinylchloridharz-Formprodukts nach Anspruch 7 als Oberflächenhaut einer Kraftfahrzeug-Instrumententafel.

9. Ein Laminat, umfassend:
ein geschäumtes Polyurethan-Formteil; und
das Vinylchloridharz-Formprodukt nach Anspruch 7.

## Revendications

1. Composition de résine de chlorure de vinyle comprenant :
(a) une résine de chlorure de vinyle ;
(b) un trimellitate ;
(c) un pyromellitate formé à partir d'un composé représenté par la formule (1) suivante 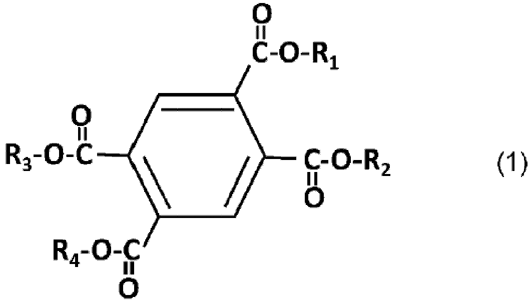 où R₁, R₂, R₃ et R₄ sont des groupes alkyle qui peuvent être identiques ou différents, et le rapport total de chaînes linéaires de R₁, R₂, R₃ et R₄ est de 90 % en moles ou plus, et
(d) une huile de silicone,
dans laquelle une teneur en pourcentage de (c) le pyromellitate par rapport à une teneur totale de (b) le trimellitate et (c) le pyromellitate est de 15 % en masse ou plus.

2. Composition de résine de chlorure de vinyle selon la revendication 1,
dans laquelle la teneur en pourcentage de (c) le pyromellitate par rapport à la teneur totale de (b) le trimellitate et (c) le pyromellitate est de 40 % en masse ou moins.

3. Composition de résine de chlorure de vinyle selon la revendication 1 ou 2,
dans laquelle la teneur totale de (b) le trimellitate et (c) le pyromellitate par rapport à 100 parties en masse de (a) la résine de chlorure de vinyle est de 5 parties en masse ou plus et de 200 parties en masse ou moins.

4. Composition de résine de chlorure de vinyle selon l'une quelconque des revendications 1 à 3,
dans laquelle une teneur de (d) l'huile de silicone par rapport à 100 parties en masse de (c) le pyromellitate est de 0,7 partie en masse ou plus.

5. Utilisation de la composition de résine de chlorure de vinyle selon l'une quelconque des revendications 1 à 4 dans le moulage de poudre.

6. Utilisation de la composition de résine de chlorure de vinyle selon la revendication 5 dans le moulage par embouage de poudre.

7. Produit moulé en résine de chlorure de vinyle pouvant être obtenu par moulage de la composition de résine de chlorure de vinyle selon l'une quelconque des revendications 1 à 4.

8. Utilisation du produit moulé en résine de chlorure de vinyle selon la revendication 7 en tant que peau de surface d'un tableau de bord d'automobile.

9. Stratifié comprenant :
un produit moulé en polyuréthane expansé ; et
le produit moulé en résine de chlorure de vinyle selon la revendication 7.
